# EUROPÄISCHE PATENTSCHRIFT

(11) **EP 3 218 882 B1**
(45) Veröffentlichungstag und Bekanntmachung des Hinweises auf die Patenterteilung: **01.01.2020**
(21) Anmeldenummer: 15791562.0
(22) Anmeldetag: 03.11.2015
(51) Int. Cl.: G07C 5/08, B66B 25/00, B66B 5/00

(54) **SYSTEM UND VERFAHREN ZUR ÜBERWACHUNG EINES TRANSPORTES EINER PERSONENTRANSPORTVORRICHTUNG BEZIEHUNGSWEISE EINER TRANSPORTEINHEIT**
TRANSPORT MONITORING MODULE AND METHOD FOR MONITORING A TRANSPORT OF A PASSENGER TRANSPORTATION DEVICE OR A TRANSPORT UNIT
MODULE DE SURVEILLANCE DU TRANSPORT ET PROCÉDÉ DE SURVEILLANCE DU TRANSPORT D'UN DISPOSITIF DE TRANSPORT DE PERSONNES, UNE UNITÉ DE TRANSPORT

(30) Priorität: 12.11.2014 EP 14192843
(43) Veröffentlichungstag der Anmeldung: 20.09.2017
(73) Patentinhaber: Inventio AG, 6052 Hergiswil (CH)
(72) Erfinder: MATHEISL, Michael, 2331 Vösendorf (AT); MARKS, Esteban, 8008 Zürich (CH); NOVACEK, Thomas, 2320 Schwechat (AT)
(86) Internationale Anmeldenummer: PCT/EP2015/075622
(87) Internationale Veröffentlichungsnummer: WO 2016/074997

(56) Entgegenhaltungen:
- CN-A- 102 556 792
- JP-A- 2010 189 162
- US-A1- 2004 094 366
- US-B1- 6 267 219
- US-B1- 6 748 305

## Beschreibung

Die Erfindung betrifft ein System aufweisend ein Transportüberwachungsmodul, welches zur Überwachung eines Transportes einer Personentransportvorrichtung oder einer Transporteinheit als Teil einer Personentransportvorrichtung dient und ein Verfahren zur Überwachung eines Transportes einer Personentransportvorrichtung beziehungsweise einer Transporteinheit. Speziell betrifft die Erfindung das Gebiet der Transportüberwachung für Personentransportvorrichtungen, die als Ganzes oder in ein oder mehreren Transporteinheiten zerlegt, transportiert werden.

Aus der JP2010189162A ist ein Inspektionssystem für einen Aufzug bekannt.

Aus der DE 198 32 341 A1 sind ein Verfahren und eine Vorrichtung zum Erfassen von Beschleunigungswerten von Transportgütern bekannt. Hierbei ist es bekannt, dass wegen der Aufteilung längerer Transportwege in mehrere Abschnitte, zum Beispiel in Straßen-, Flugzeug-, Schiffs- oder Bahnabschnitte, der Zeitpunkt beziehungsweise der Abschnitt, in dem eine mögliche Beschädigung eines Transportguts eingetreten ist, nachträglich nur schwer und unzureichend feststellbar ist. Hierbei können bei empfindlichen Transportgütern erhebliche Schäden eintreten, die möglicherweise zunächst äußerlich nicht sofort erkennbar sind. Die Auswirkungen eines Defekts aus einer dynamischen Einwirkung können eventuell erst Monate nach der Ablieferung festgestellt werden. Die bekannte Lösung erfasst Beschleunigungswerte in drei Raumachsen, wobei die von Sensoren gemessenen Werte schaltungstechnisch aufbereitet und gespeichert werden, wenn der erfasste Beschleunigungswert einen vorgegebenen Grenzwert betragsmäßig übersteigt. Für eine spätere zeitliche Rekonstruktion wird zusammen mit jedem Speicherwert oder in regelmäßigen Abständen eine Zeitinformation von einer Echtzeituhr abgespeichert.

Die aus der DE 198 32 341 A1 bekannte Vorrichtung und das bekannte Verfahren haben den Nachteil, dass die Vorrichtung zur Überwachung aufwändig ausgestaltet und dementsprechend teuer ist. Speziell ist zur Datenaufbereitung und Speicherung ein Mikrocontroller vorgesehen. Ferner sind an den Mikrocontroller Bedien- und Anzeigeelemente angeschlossen. Der Wert der Vorrichtung stellt einen Anreiz dar, diese während des Transportes zu stehlen. Außerdem besteht auch während eines Transportes über beispielsweise mehrere Transportabschnitte und in der Regel durch mehrere Beteiligte ein Anreiz, solch eine Vorrichtung beim Auftreten äußerer Einwirkungen, die Transportschäden zur Folge haben können, zu entwenden oder die gespeicherten Daten gar zu manipulieren. Ein weiteres Problem ergibt sich dadurch, dass die Vorrichtung zur Erfassung von Erschütterungen nach dem Transport in der Regel entfernt wird, um diese für einen weiteren Transport zu nutzen. Um beispielsweise auch bei erst Monate nach der Ablieferung auftretenden Defekten noch einen Nachweis zu haben, ist dann eine entsprechend aufwändige, lückenlose Transportdatensicherung erforderlich, die Daten müssen ausgelesen und beispielsweise zentral in einer Datenbank des Herstellers oder Eigentümers des Transportgutes gespeichert werden.

Eine Aufgabe der Erfindung ist es, ein System mit einem Transportüberwachungsmodul sowie ein Verfahren zur Überwachung eines Transportes zu schaffen, die einen verbesserten Aufbau beziehungsweise eine verbesserte Funktionsweise haben. Speziell ist es eine Aufgabe der Erfindung, ein System mit einem Transportüberwachungsmodul sowie ein Verfahren zur Überwachung eines Transportes anzugeben, die eine kostengünstige Ausgestaltung des Transportüberwachungsmoduls und/oder eine verbesserte Zuverlässigkeit der Datenerhebung und/oder Datenspeicherung und/oder eine vereinfachte Datenerhebung und/oder Datenspeicherung ermöglichen.

Diese Aufgaben werden gelöst durch ein System, das eine Personentransportvorrichtung und mindestens ein Transportüberwachungsmodul aufweist, welches Transportüberwachungsmodul zumindest während des Transports der Personentransportvorrichtung durch einen Transporteur von ihrem Absendungsort zu ihrem Bestimmungsort an dieser angeordnet werden kann. Der Absendungsort kann beispielsweise der Herstellungsort beziehungsweise das Herstellungswerk sein, in dem die Personentransportvorrichtung hergestellt wurde. Ferner kann der Absendungsort auch ein Lagerort sein, an dem die Personentransportvorrichtung zwischengelagert wird. Bei Rücksendungen ins Herstellerwerk ist der Absendungsort logischerweise der Ort, an dem die Personentransportvorrichtung ausgebaut wurde. Der Bestimmungsort kann ein Zwischenlager, ein Bauwerk des zukünftigen Betreibers der

Personentransportvorrichtung oder wie vorangehend erwähnt, bei Rücksendungen auch das Herstellerwerk sein. Die Personentransportvorrichtung ist als Fahrtreppe, Fahrsteig oder Aufzug ausgestaltet. Gelegentlich werden große, beziehungsweise lange Personentransportvorrichtungen zwecks einfacheren Transportes auch in zwei oder mehr Teile, in sogenannte Transporteinheiten unterteilt. Demzufolge ist das Transportüberwachungsmodul auch an einer Transporteinheit anordnenbar, welche ein Teil einer Personentransportvorrichtung ist.

Das Transportüberwachungsmodul weist zumindest einen Sensor auf. Des Weiteren weist das Transportüberwachungsmodul eine Schnittstelleneinheit auf, über die zumindest während eines Transportes der Personentransportvorrichtung beziehungsweise der Transporteinheit eine Verbindung des Transportüberwachungsmoduls mit einem Datenspeicher der Personentransportvorrichtung hergestellt werden kann. Die Schnittstelleneinheit ist so ausgestaltet, dass zu speichernde Transportüberwachungsdaten, die zumindest teilweise auf Sensordaten des zumindest einen Sensors basieren, in dem Datenspeicher der Personentransportvorrichtung permanent speicherbar sind. Der Datenspeicher ist in der Personentransportvorrichtung permanent verbleibend angeordnet. Die Sensordaten können insbesondere Beschleunigungsdaten, Temperaturdaten, Luftfeuchtigkeitsdaten und dergleichen mehr sein.

Die Transporteinheit beziehungsweise die Personentransportvorrichtung sind keine Bestandteile des erfindungsgemäßen Transportüberwachungsmoduls, bilden jedoch mit diesem zumindest temporär während der Transportphase ein System. Zur Überwachung des Transportes einer in mehrere Transporteinheiten aufgeteilten Personentransportvorrichtung können hierbei ein oder mehrere Transportüberwachungsmodule dienen. Gegebenenfalls kann das Transportüberwachungsmodul auch nur an einer Transporteinheit der Personentransportvorrichtung angeordnet sein. Beispielsweise kann sich eine Steuerung der Personentransportvorrichtung, die den Datenspeicher aufweist, in einer Transporteinheit befinden, während andere Transporteinheiten der Personentransportvorrichtung keinen solchen Datenspeicher aufweisen. Da die empfindlichste Transporteinheit üblicherweise diejenige mit der Steuerung ist, wird durch das Anordnen des Transportüberwachungsmoduls in dieser Transporteinheit und dessen Verbinden mit dem Datenspeicher der Steuerung in besonders vorteilhafter Weise eine Überwachung der empfindlichsten Transporteinheit gewährleistet. Die anderen Transporteinheiten werden üblicherweise mit demselben Transportmittel wie die empfindlichste Transporteinheit, beispielsweise in einem Container transportiert und erfahren dementsprechend dieselben Transportbelastungen.

Das Transportüberwachungsmodul kann somit in vorteilhafter Weise unabhängig von der zu transportierenden Personentransportvorrichtung bereitgestellt werden. Nach einem Transport kann das Transportüberwachungsmodul dann entfernt und für einen weiteren Transport genutzt werden. Eine Datensicherung ist hierbei nicht erforderlich, da die von dem Transportüberwachungsmodul erfassten Sensordaten bereits während des Transportes als Transportüberwachungsdaten in dem Datenspeicher der Personentransportvorrichtung hinterlegt worden sind. Hierdurch werden auch Fehlerquellen ausgeschlossen. Insbesondere entfällt das Erfordernis einer zeitnahen Datensicherung nach dem Transport, da die Transportüberwachungsdaten permanent in dem Datenspeicher hinterlegt werden können.

Ein weiterer Vorteil besteht darin, dass die permanent gespeicherten Transportüberwachungsdaten einem Servicetechniker bei einer Fehlfunktion oder einer Inspektion beziehungsweise einer Wartung der Personentransportvorrichtung angezeigt werden können. Somit stehen dem Servicetechniker die Transportüberwachungsdaten ohne weiteren Aufwand direkt am Ort der Personentransportvorrichtung zur Verfügung. Hierdurch erhält der Servicetechniker auf einfache Weise die Möglichkeit, die Transportüberwachungsdaten bei seiner Beurteilung einer Fehlfunktion oder dergleichen hinzuzuziehen. Die Erkennung eines Defektes, der beispielsweise aus einer zeitlich zurückliegenden, äußerlich nicht sofort erkennbaren Einwirkung während des Transportes resultiert, wird dadurch wesentlich vereinfacht und gegebenenfalls erst praktisch möglich.

Ein weiterer Vorteil besteht darin, dass im Datenspeicher der Personentransportvorrichtung die permanent gespeicherten originalen Transportüberwachungsdaten zur Verfügung stehen. Dies vermeidet Übertragungsfehler, Kopierfehler, Fehler in der Zuordnung der Daten zu der jeweiligen Personentransportvorrichtung und ähnliche Fehler beziehungsweise Fehlerquellen. Insbesondere wird eine Manipulation der gespeicherten Transportüberwachungsdaten erschwert oder ganz verhindert. Beispielsweise ist während des Transportes gegebenenfalls das Transportüberwachungsmodul auffindbar und dann zugänglich. Der Datenspeicher der Personentransportvorrichtung kann jedoch praktisch unzugänglich in der Personentransportvorrichtung verbaut sein. Somit ist zumindest während des Transportes ein unbefugter physischer oder elektrischer Zugriff auf den Datenspeicher praktisch ausschließbar.

Die Personentransportvorrichtung des Systems ist eine Fahrtreppe, ein Fahrsteig oder eine Aufzugsanlage. Die Fahrtreppe beziehungsweise der Fahrsteig wird üblicherweise im Herstellerwerk komplett aufgebaut und anschließend je nach Länge als Ganzes oder in mehrere Fahrtreppen- beziehungsweise Fahrsteigmodule aufgeteilt, verpackt und dann weltweit versendet. Versandfertige Fahrtreppen- beziehungsweise Fahrsteigmodule, aber auch Kisten mit Aufzugskomponenten einer Aufzugsanlage werden in der vorliegenden Beschreibung als Transporteinheiten bezeichnet. Auf dem Transportweg können beispielsweise durch Schläge, Stürze und durch Umkippen Transportschäden an verpackten Transporteinheiten oder an als Ganzes verpackten Personentransportanlagen entstehen.

Wenn ein Transportschaden entsteht, dann kann durch die Auswertung der aufgezeichneten Transportüberwachungsdaten beispielsweise der Zeitpunkt des Schadensereignisses ermittelt werden. Dadurch können der schadenverursachende Transporteur beziehungsweise dessen Haftpflichtversicherung belangt werden. Besonders kritisch hinsichtlich Beschädigungen sind Komponenten wie ein Antrieb, eine Fahrtreppen- beziehungsweise Fahrsteigsteuerung und Schaltelemente, welche üblicherweise alle im selben Fahrtreppen- beziehungsweise Fahrsteigabschnitt angeordnet sind. Bei Aufzugsanlagen ist es beispielsweise die Transporteinheit mit der diesbezüglichen Kabinen- und Motor-Steuerung. Somit ist eine vorteilhafte Überwachung des Transportes von insbesondere Fahrtreppen, Fahrsteigen und Aufzugskomponenten möglich.

Da das Transportüberwachungsmodul keine Speichereinheit und keine Recheneinheit aufweisen muss, kann dieses kostengünstiger ausgeführt werden, wodurch es für Diebe weniger attraktiv ist. Ein Computerprogramm zur Erfassung und Speicherung der Sensordaten beziehungsweise der Transportüberwachungsdaten kann hierbei in der Steuerung der Personentransportvorrichtung gespeichert und von der Steuerung ausgeführt werden. Somit ist es vorteilhaft, dass die Personentransportvorrichtung eine Steuerung aufweist, die den Datenspeicher umfasst, und dass die Steuerung so ausgestaltet ist, dass zumindest während des Transportes eine Datenerfassung der Sensordaten durch den mindestens einen Sensor durchgeführt wird.

Sofern zumindest eine Lokalisierungseinrichtung im Transportüberwachungsmodul vorhanden ist, kann die Erfassung der Lokalisierungsdaten ebenfalls durch das vorangehend erwähnte Computerprogramm initialisiert, von der Steuereinrichtung gesteuert werden. Zudem kann das Computerprogramm Programmschritte vorsehen, die eine Übertragung der Sensordaten und gegebenenfalls der Lokalisierungsdaten über die Schnittstelleneinheit des Transportüberwachungsmoduls zu der Steuerung der Personentransportvorrichtung und eine anschließende Speicherung der Transportüberwachungsdaten in dem Datenspeicher der Steuerung beinhalten.

Vorteilhaft ist es auch, dass die Schnittstelleneinheit des Transportüberwachungsmoduls ein Verbindungselement aufweist, an dem die Schnittstelleneinheit über eine lösbare Verbindung zumindest mittelbar mit dem Datenspeicher der Personentransportvorrichtung verbindbar ist. Die Verbindung kann direkt oder mittelbar erfolgen. Eine mittelbare Verbindung ist beispielsweise über ein geeignetes Kabel, aber auch mittels kabelloser Verbindungen wie beispielsweise Bluetooth möglich. Dies ermöglicht eine flexible Anordnung des Transportüberwachungsmoduls relativ zu dem Datenspeicher beziehungsweise zu einer Steuerung mit dem Datenspeicher. Gegebenenfalls kann auch eine direkte Verbindung von Vorteil sein. Hierfür können beispielsweise an der Steuerung ein geeignetes Verbindungselement und/oder eine geeignete Aufnahme vorgesehen sein, um das Transportüberwachungsmodul direkt anzuschließen. Die Schnittstelleneinheit kann hierdurch in vorteilhafter Weise physisch mittels einer Steckverbindung mit dem Datenspeicher der Personentransportvorrichtung verbunden werden.

Vorteilhaft ist es auch, wenn ein Energiespeicher im Transportüberwachungsmodul vorgesehen ist, der den zumindest einen Sensor und/oder die Schnittstelleneinheit und/oder zumindest eine weitere Einrichtung des Transportüberwachungsmoduls zumindest während des Transportes mit elektrischer Energie versorgt. Der Energiespeicher des Transportüberwachungsmoduls kann hierbei gegebenenfalls auch die Steuerung der Personentransportvorrichtung mit Energie versorgen, um den Programmablauf des weiter oben erwähnten Computerprogramms zur Überwachung des Transportes zu ermöglichen. Die Schnittstelleneinheit ist dann so ausgestaltet, dass neben einer Datenübertragung auch eine Energieübertragung ermöglicht ist. Der Energiespeicher kann ein Akkumulator, eine Batterie, ein Kondensator mit großer Kapazität und dergleichen mehr sein.

Außerdem ist es vorteilhaft, wenn im Transportüberwachungsmodul eine örtliche Lokalisierungseinrichtung vorgesehen ist, die Lokalisierungsdaten bezüglich einer örtlichen Lokalisierung erzeugt. Solch eine örtliche Lokalisierungseinrichtung kann beispielsweise auf einem Satellitennavigationssystem für zivile und militärische Zwecke wie das GPS, basieren. Zusätzlich oder alternativ ist es von Vorteil, wenn eine zeitliche Lokalisierungseinrichtung vorgesehen ist, die Lokalisierungsdaten bezüglich einer relativen und/oder absoluten zeitlichen Lokalisierung erzeugt. Solch einer zeitlichen Lokalisierungseinrichtung kann beispielsweise der Empfang einer Weltzeit zugrunde liegen. Eine relative zeitliche Lokalisierung kann hingegen unabhängig vom Empfang einer Weltzeit realisiert werden. Hierbei ist auch eine geeignete Kombination der genannten Möglichkeiten denkbar, um die zu speichernden Transportüberwachungsdaten zu erzeugen.

In vorteilhafter Weise können somit die zu speichernden Transportüberwachungsdaten auf den Sensordaten des zumindest einen Sensors sowie örtlichen Lokalisierungsdaten der örtlichen Lokalisierungseinrichtung und/oder zeitlichen Lokalisierungsdaten der zeitlichen Lokalisierungseinrichtung basieren. Der Sensor kann hierbei als dreiachsiger Beschleunigungssensor ausgebildet sein. Selbstverständlich können beispielsweise auch zwei zweiachsige Beschleunigungssensoren verwendet werden.

Somit kann ein Transportüberwachungsmodul geschaffen werden, welches zumindest einen Sensor und eine Schnittstelleneinheit aufweist. Vorzugsweise weist solch ein Transportüberwachungsmodul auch einen Energiespeicher auf, da sonst die Energieversorgung von der Personentransportvorrichtung, insbesondere einer Fahrtreppensteuerung, einer Fahrsteigsteuerung oder einer Aufzugssteuerung, erfolgen müsste. Solche Steuerungen haben aber in der Regel keinen oder keinen ausreichenden Energiespeicher.

Nach dem Transport wird das Transportüberwachungsmodul vorzugsweise von der Personentransportvorrichtung, insbesondere einer Steuerung der Personentransportvorrichtung, getrennt. Das entfernte Transportüberwachungsmodul kann dann für weitere Einsätze an das Herstellerwerk zurückgeschickt werden. Das zur Datenerfassung erforderliche Computerprogramm kann in der Steuerung der Personentransportvorrichtung hinterlegt sein. Solch ein Computerprogramm kann auf geeignete Weise ablaufen. Speziell kann ein Programmablauf vorgegeben sein, bei dem die zur Verfügung stehende Energie und die Speicherkapazität des Datenspeichers optimal ausgenutzt werden. Beispielsweise können ein Ruhemodus (Schlafmodus; Standby-Modus) und die Erfassung von Ereignissen über einem definierten Schwellwert realisiert werden, um den Ablauf zu optimieren.

Daher kann das Transportüberwachungsmodul für sich für einen Dieb höchst unattraktiv ausgestaltet werden, da die darin enthaltenen Teile wie ein Energiespeicher und ein Sensor kein lohnenswertes Diebesgut sind. Die gespeicherten Transportüberwachungsdaten sind auch durch die Entfernung des Transportüberwachungsmoduls nicht einfach vom eigentlichen Transportgut trennbar. Die im Datenspeicher der Personentransportanlage permanent gespeicherten Daten können vielmehr über die gesamte Lebensdauer mit der Personentransportvorrichtung verbunden sein und jederzeit durch einen Servicetechniker abgerufen werden. So sind auch sehr viel später auftretende Auswirkungen von während des Transportes zwischen dem Absendungsort und dem Bestimmungsort aufgetretenen Ereignissen richtig interpretierbar.

Ein System zur Überwachung eines Transportes einer Personentransportvorrichtung beziehungsweise einer Transporteinheit von ihrem Absendungsort bis zum Bestimmungsort beziehungsweise dem Einbauort, umfasst immer mindestens ein Transportüberwachungsmodul und eine Personentransportvorrichtung beziehungsweise eine Transporteinheit einer Personentransportvorrichtung.

Die Personentransportvorrichtung weist eine Steuerung und einen Datenspeicher auf. Diese Steuerung dient, wenn die Personentransportvorrichtung an ihrem Bestimmungsort montiert worden ist, als Steuerung für die relevanten Bewegungsabläufe der Personentransportvorrichtung beziehungsweise der Fahrtreppe, des Fahrsteiges oder der Aufzugsanlage. Diese Steuerung und der Datenspeicher werden erfindungsgemäß aber nicht nur zum Betreiben der Personentransportvorrichtung, sondern auch zur permanenten Speicherung der Transportdaten verwendet.

Durch die Steuerung werden zumindest während des Transportes die Erfassung der Sensordaten des mindestens einen Sensors, die Übertragung der Sensordaten über die Schnittstelleneinheit des Transportüberwachungsmoduls zur Steuerung , die Aufbereitung der Sensordaten zu Transportüberwachungsdaten und die Speicherung der Transportüberwachungsdaten im Datenspeicher gesteuert. Dazu kann bereits Werksseitig in der Steuerung ein Computerprogramm hinterlegt sein. Es ist jedoch auch möglich, dass das Transportüberwachungsmodul einen kostengünstigen nichtflüchtigen Speicher, beispielsweise ein ROM, EPROM, EEPROM und dergleichen mehr aufweist, in dem das Computerprogramm gespeichert ist und das von der Steuerung abgerufen und geladen werden kann, sobald das Transportüberwachungsmodul über die Schnittstelleneinheit mit des Steuerung verbunden ist. Selbstverständlich kann auch ein flüchtiger Speicher wie ein Random Access Memory zur Speicherung des Computerprogramms verwendet werden, wenn im Transportüberwachungsmodul ein Energiespeicher vorhanden ist.

Bei Vorhandensein zumindest einer Lokalisierungseinrichtung können deren Lokalisierungsdaten ebenfalls über die Schnittstelleneinheit des Transportüberwachungsmoduls durch die Steuerung abgerufen werden. Die Lokalisierungsdaten können dann durch die Steuerung den Sensordaten zugeordnet und verarbeitet werden.

Sofern keine Lokalisierungseinrichtung vorgesehen ist, können die von der Steuerung empfangenen Sensordaten zumindest mit einer fortlaufenden Nummerierung versehen sein, um wenigstens die richtige Reihenfolge der Belastungsereignisse zu erhalten.

Die von der Steuerung verarbeiteten, zumindest teilweise auf Sensordaten zumindest eines Sensors des Transportüberwachungsmoduls basierenden Daten können als Transportüberwachungsdaten im Datenspeicher permanent gespeichert werden.

Ein Verfahren zur Überwachung eines Transportes einer Personentransportvorrichtung beziehungsweise einer Transporteinheit als Teil einer Personentransportvorrichtung von ihrem Absendungsort zu ihrem Bestimmungsort kann die folgenden Schritte aufweisen:
- Im Herstellerwerk wird an der Personentransportvorrichtung beziehungsweise an deren Transporteinheit ein erfindungsgemäßes Transportüberwachungsmodul angeordnet.
- Zumindest während eines Transportes wird eine Verbindung des Transportüberwachungsmoduls mit einem Datenspeicher der Personentransportvorrichtung über eine Schnittstelleneinheit des Transportüberwachungsmoduls hergestellt.
- Zu speichernde Transportüberwachungsdaten, die zumindest teilweise auf Sensordaten zumindest eines Sensors des Transportüberwachungsmoduls basieren, werden im Datenspeicher der Personentransportvorrichtung permanent gespeichert und stehen fortan jederzeit zur Verfügung, da der Datenspeicher in der Personentransportvorrichtung permanent verbleibend angeordnet ist.

Selbstverständlich kann ein solches Verfahren weitere Schritte umfassen, indem beispielsweise die in dem Datenspeicher der Personentransportvorrichtung gespeicherten Transportüberwachungsdaten nach dem Transport ausgelesen werden und in Abhängigkeit von den ausgelesenen Transportüberwachungsdaten bestimmt und ausgegeben wird,
- ob eine Rücksendung der Personentransportvorrichtung oder deren Transporteinheit in das Herstellerwerk,
- eine Anforderung von Reparaturmaterial oder
- eine Montage der Personentransportvorrichtung empfehlenswert ist.

Das Verfahren kann ferner die Schritte aufweisen, dass
- das Transportüberwachungsmodul nach dem Transport entfernt wird, wobei die Transportüberwachungsdaten nach der Entfernung des Transportüberwachungsmoduls permanent in dem Datenspeicher der Personentransportvorrichtung gespeichert bleiben und
- zumindest bei einer Fehlfunktion der Personentransportvorrichtung und/oder einer Inspektion oder Wartung der Personentransportvorrichtung eine zumindest auf Anfrage erfolgende Ausgabe der Transportüberwachungsdaten aus dem Datenspeicher erfolgt.

Das entfernte Transportüberwachungsmodul kann anschließend zu einer weiteren Personentransportvorrichtung oder zu einer weiteren Transporteinheit als Teil einer Personentransportvorrichtung transportiert und dann an der weiteren Personentransportvorrichtung beziehungsweise Transporteinheit zur Überwachung des Transportes der weiteren Personentransportvorrichtung beziehungsweise Transporteinheit angeordnet werden.

Es besteht aber auch die Möglichkeit, dass das Transportüberwachungsmodul nach dem Transport und der Montage der Personentransportvorrichtung in der Personentransportvorrichtung verbleibt und fortan der Erfassung von auf die Personentransportvorrichtung einwirkenden, kritischen Schwingungen dient. Solche, den reibungslosen Betrieb beeinträchtigende, kritische Schwingungen können beispielsweise seismische Schwingungen sein, wenn die Personentransportvorrichtung in einem Erdbebengebiet montiert und eingesetzt wird. Die kritischen Schwingungen können aber auch während der Montage und/oder der Wartung der Personentransportvorrichtung auftreten. Des Weiteren können kritische Schwingungen auch von Benutzern der Personentransportvorrichtung verursacht werden, wenn beispielsweise Vandalen in einer Aufzugskabine einer Personentransportvorrichtung hüpfen und/oder schaukeln.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
- Figur 1:: ein System mit einem Transportüberwachungsmodul und einer Transporteinheit einer Personentransportvorrichtung in einer schematischen Darstellung gemäß einer möglichen Ausgestaltung der Erfindung;
- Figur 2:: ein System mit einem Transportüberwachungsmodul und einer Transporteinheit einer als Fahrtreppe ausgestalteten Personentransportvorrichtung in einer auszugsweisen, schematischen Darstellung gemäß einem ersten Ausführungsbeispiel der Erfindung und
- Figur 3:: ein System mit einem Transportüberwachungsmodul und einer Transporteinheit einer als Fahrsteig ausgestalteten Personentransportvorrichtung in einer auszugsweisen, schematischen Darstellung gemäß einem zweiten Ausführungsbeispiel der Erfindung.

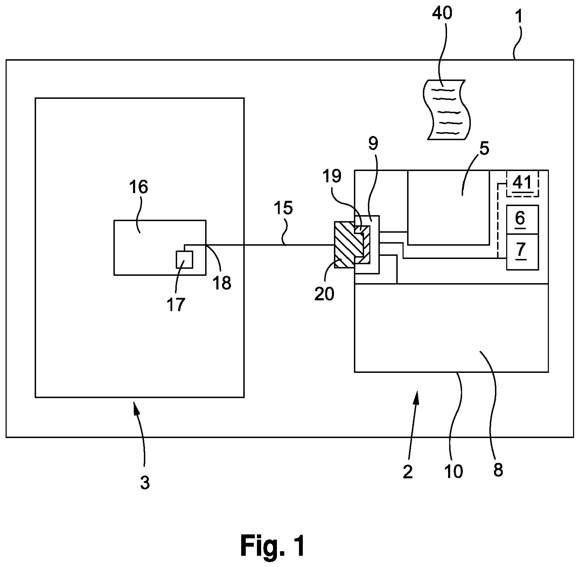

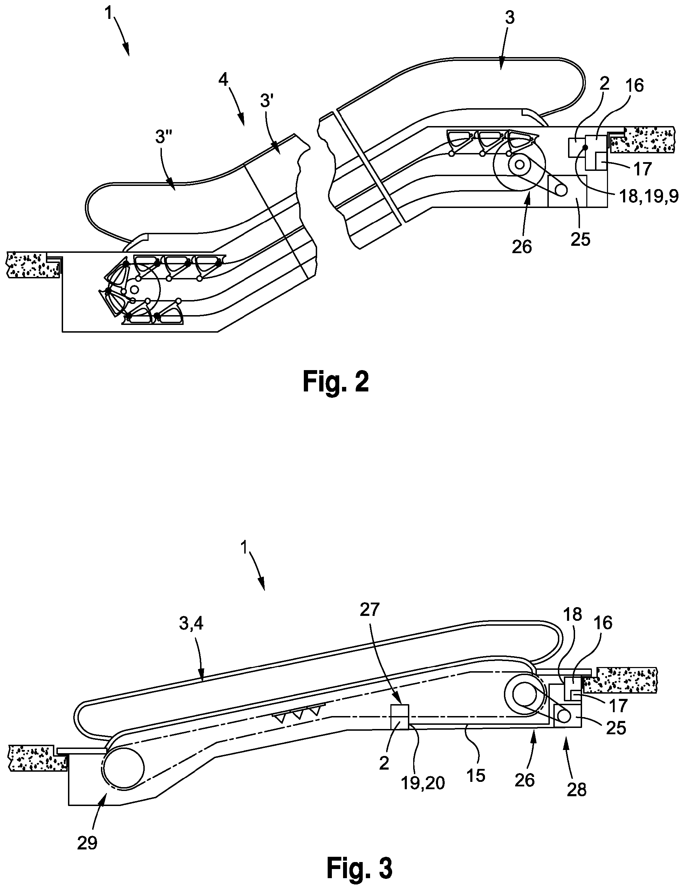

Figur 1 zeigt ein System 1 mit einem Transportüberwachungsmodul 2 und einer Transporteinheit 3 einer Personentransportvorrichtung 4 (Figuren 2 und 3) in einer schematischen Darstellung gemäß einer möglichen Ausgestaltung der Erfindung. Die Personentransportvorrichtung 4 kann als Fahrtreppe 4, Fahrsteig 4 oder Aufzug 4 ausgestaltet sein.

Das Transportüberwachungsmodul 2 weist zumindest einen Sensor 5 auf. Der Sensor 5 ist in diesem Ausführungsbeispiel als dreiachsiger Beschleunigungssensor 5 ausgebildet. Alternativ oder zusätzlich können auch andere Sensortypen, beispielsweise ein Temperatursensor und/oder ein Feuchtigkeitssensor Teil des Transportüberwachungsmoduls 2 sein. Außerdem weist das Transportüberwachungsmodul 2 eine örtliche Lokalisierungseinrichtung 6 und eine zeitliche Lokalisierungseinrichtung 7 auf. Ferner ist ein Energiespeicher 8 vorgesehen, der elektrische Energie speichert und beispielsweise als Batterie 8, Akkumulator 8 oder Kondensator 8 ausgestaltet sein kann. Des Weiteren ist eine Schnittstelleneinheit 9 des Transportüberwachungsmoduls 2 vorgesehen, das mit dem Sensor 5, den Lokalisierungseinrichtungen 6, 7 und dem Energiespeicher 8 elektrisch verbunden ist. Der Sensor 5, die Lokalisierungseinrichtungen 6, 7, der Energiespeicher 8 und die Schnittstelleneinheit 9 können innerhalb eines gemeinsamen Gehäuses 10 des Transportüberwachungsmoduls 2 angeordnet sein.

In diesem Ausführungsbeispiel ist ein Verbindungskabel 15 vorgesehen, das mehrere voneinander unabhängige Leitungen beziehungsweise Litzen aufweisen kann. Die Transporteinheit 3 weist eine Steuerung 16 mit einem Datenspeicher 17 auf. Selbstverständlich kann der Datenspeicher 17 auch von der Steuerung 16 beabstandet in der Transporteinheit 3 angeordnet sein. Ungeachtet seiner Anordnung in der Transporteinheit 3 beziehungsweise in der Personentransportvorrichtung 4, ist der Datenspeicher 17 durch die Steuerung beschreibbar. Über das Verbindungskabel 15 ist die Schnittstelleneinheit 9 in diesem Ausführungsbeispiel mittelbar mit dem Datenspeicher 17 verbunden. Dadurch kann das Transportüberwachungsmodul 2 auch entfernt von dem Datenspeicher 17 beziehungsweise einer diesbezüglichen Anschlussstelle 18 an der Steuerung 16, die zum Anschließen des Verbindungskabels 15 dient, angeordnet werden.

Bei einer abgewandelten Ausgestaltung kann das Verbindungskabel 15 auch entfallen, wenn die Steuerung 16 und das Transportüberwachungsmodul 2 über eine Funkverbindung wie beispielsweise eine Bluetooth-Verbindung und dergleichen mehr verfügen. Die Funkverbindung ist jedoch im Vergleich mit einer physischen Verbindung mittels Verbindungskabel 15 derzeit recht teuer.

Des Weiteren kann auch ein direkter Kontakt zwischen der Schnittstelleneinheit 9 und der Anschlussstelle 18 an der Steuerung 16 der Personentransportvorrichtung 4 gebildet werden. Das Transportüberwachungsmodul 2 ist dann nahe an dem Datenspeicher 17 beziehungsweise an der Anschlussstelle 18 angeordnet.

Die Schnittstelleneinheit 9 weist ein Verbindungselement 19 auf. Das Verbindungselement 19 kann beispielsweise als Verbindungsbuchse 19 ausgestaltet sein. Ferner ist an dem Verbindungskabel 15 ein Verbindungselement 20 vorgesehen, das beispielsweise als Verbindungsstecker 20 ausgebildet sein kann.

Der Verbindungsstecker 20 des Verbindungskabels 15 ist in die Verbindungsbuchse 19 der Schnittstelleneinheit 9 eingefügt. Hierdurch sind die Verbindungselemente 19, 20 lösbar miteinander verbunden. Somit ist die Schnittstelleneinheit 9 an ihrem Verbindungselement 19 über eine lösbare Steckverbindung 19, 20 mittels des Verbindungskabels 15 mittelbar mit dem Datenspeicher 17 der Personentransportvorrichtung 4 verbunden. Hierdurch ist eine physische Verbindung der Schnittstelleneinheit 9 mit dem Datenspeicher 17 gegeben. Eine Störung einer Übertragung, wie sie bei einer schlechten Funkverbindung möglich ist, wird dadurch verhindert.

Der Energiespeicher 8 versorgt den Sensor 5, die Lokalisierungseinrichtungen 6, 7 und die Schnittstelleneinheit 9 mit elektrischer Energie. Hierbei kann über das Verbindungskabel 15 auch ein Energietransport, gegebenenfalls in beiden Richtungen, gewährleistet werden. Dann kann der Energiespeicher 8 auch die Steuerung 16 zumindest teilweise mit Energie versorgen und die zum Speichern von Transportüberwachungsdaten in den Datenspeicher 17 erforderliche Energie zur Verfügung stellen. Über die Energie aus dem Energiespeicher 8 kann hierbei auch der Ablauf eines Computerprogramms, insbesondere eines Steuer- beziehungsweise Transportüberwachungsprogramms in der Steuerung 16 gewährleistet werden. Sobald die Personentransportvorrichtung 4 installiert und deren Steuerung 16 mit einem bauwerkseitigen Stromversorgungsnetz verbunden ist, kann der Energiespeicher 8 beispielsweise auch über die Schnittstelleneinheit 9 mit elektrischer Energie geladen werden, bevor das Transportüberwachungsmodul 2 entfernt wird.

Die Lokalisierungseinrichtungen 6, 7 und die Steuerung 16 stellen somit weitere Einrichtungen dar, die zumindest während des Transportes mit elektrischer Energie aus dem Energiespeicher 8 versorgt werden können.

Während des Transportes erzeugt der Sensor 5 Sensordaten, insbesondere Beschleunigungsdaten beziehungsweise Beschleunigungswerte. Ferner erzeugt die örtliche Lokalisierungseinrichtung 6 Lokalisierungsdaten bezüglich einer örtlichen Lokalisierung des Transportüberwachungsmoduls 2. Die zeitliche Lokalisierungseinrichtung 7 erzeugt Lokalisierungsdaten bezüglich einer relativen und/oder absoluten zeitlichen Lokalisierung. Eine absolute zeitliche Lokalisierung ist hierbei durch den Empfang eines geeigneten Zeitsignals möglich. Eine relative zeitliche Lokalisierung kann durch eine Quarzuhr mit Datumsfunktion oder auch durch einen einfachen Taktgeber realisiert werden. Solch ein Taktgeber kann beispielsweise während des Transportes sekunden- oder minutengenau vorwärtszählen. Hierbei ist auch eine Kombination der genannten Möglichkeiten denkbar. Dadurch kann beispielsweise bei Empfangsstörungen über eine relative zeitliche Lokalisierung eine Fortschreibung der Uhrzeit erzielt werden.

Die Schnittstelleneinheit 9 ist so ausgestaltet, dass zu speichernde Transportüberwachungsdaten, die auf den Sensordaten des Sensors 5 und den Lokalisierungsdaten der Lokalisierungseinrichtungen 6, 7 basieren, in dem Datenspeicher 17 der Personentransportvorrichtung 4 permanent speicherbar sind. Hierbei kann eine Auswahl getroffen werden, um zu bestimmen, welche Transportüberwachungsdaten zu speichern sind. Auf geeignete Weise können hierbei zum Beispiel Grenzwerte für die Sensordaten des Sensors 5 festgelegt werden. Solche Sensordaten können je nach eingesetztem Sensor 5 beispielsweise Beschleunigungsdaten, Feuchtigkeitsdaten, Tempertaturdaten und dergleichen mehr sein. Wenn beispielsweise nur Sensordaten gespeichert werden, die einen gewissen Grenzwert überschreiten, dann stellt dies eine wesentliche Datenreduktion dar. Ferner können Lokalisierungsdaten im Wesentlichen gleichzeitig mit Sensordaten hinterlegt werden. Dann werden entsprechende Datenpaare aus Sensordaten und Lokalisierungsdaten in dem Datenspeicher 17 hinterlegt. Es ist jedoch auch ein versetztes Datenspeichern möglich. Beispielsweise können zu bestimmten Zeiten oder an bestimmten Orten Lokalisierungsdaten in den Datenspeicher 17 geschrieben werden und unabhängig davon können dazwischen Sensordaten geschrieben werden, wenn beispielsweise ein vorgegebener Grenzwert überschritten ist. Eine solche geordnete Auflistung der Sensordaten und Lokalisierungsdaten als Transportüberwachungsdaten im Datenspeicher 17 ermöglichen eine recht genaue, nachträgliche Rekonstruktion des Transportablaufs.

Somit können zu speichernde Transportüberwachungsdaten auf den Sensordaten des zumindest einen Sensors 5 sowie örtlichen Lokalisierungsdaten der örtlichen Lokalisierungseinrichtung 6 und zeitlichen Lokalisierungsdaten der zeitlichen Lokalisierungseinrichtung 7 basieren. Speziell kann hierdurch eine zuverlässige Zuordnung von äußeren Einflüssen wie Erschütterungen, Vibrationen und Stöße zu dem jeweils verantwortlichen Beteiligten des Warentransportes gewährleistet werden. Außerdem kann aufgrund der permanenten Speicherung der Transportüberwachungsdaten im Datenspeicher 17 auch zu einem späteren Zeitpunkt ein Zugriff auf diese Transportüberwachungsdaten ermöglicht werden.

Nach der Ankunft und der gegebenenfalls erforderlichen Montage der Personentransportvorrichtung 4 können mit Hilfe der Steuerung 16 die in dem Datenspeicher 17 gespeicherten Transportüberwachungsdaten ausgelesen werden. In Abhängigkeit von den ausgelesenen Transportüberwachungsdaten kann dann eine Ausgabe erfolgen. Diese Ausgabe kann anzeigen, ob eine Rücksendung der Personentransportvorrichtung 4 beziehungsweise der Transporteinheit 3 erforderlich ist. Dies kann beispielsweise dann der Fall sein, wenn aufgrund der Sensordaten entsprechend starke Einwirkungen, insbesondere hohe Beschleunigungen, erfasst worden sind. Denn dann ist gegebenenfalls eine Überprüfung der Funktionsfähigkeit im Herstellerwerk erforderlich. Ferner kann angezeigt werden, ob Reparaturmaterial anzufordern ist. Je nach der Schwere der Einwirkungen können auch ein Ausmessen der Personentransportvorrichtung 4 und ein Richten beispielsweise des Fachwerks, von Laufbahnen oder Führungsschienen und dergleichen mehr am Montageort beziehungsweise an der Baustelle erforderlich sein.

Des Weiteren kann bei einer mittleren Stärke von Umwelteinflüssen ein Austausch von Teilen der Personentransportvorrichtung 4, insbesondere der Steuerung 16 selbst, ausreichen. Im Idealfall kann angezeigt werden, dass eine Montage der Personentransportvorrichtung 4 empfehlenswert ist. Die Ausführung dieses Verfahrens hat somit wesentliche Vorteile hinsichtlich der Entscheidung, welche Maßnahmen zu treffen sind. Hierdurch kann möglichen Beschädigungen Rechnung getragen werden, die von außen nur schwer oder unzureichend feststellbar sind und gegebenenfalls erst zu späteren Defekten führen.

Außerdem können bei einer Fehlfunktion der Personentransportvorrichtung 4 oder bei einer Wartung der Personentransportvorrichtung 4 zumindest auf Anfrage von einem Servicetechniker die Transportüberwachungsdaten aus dem Datenspeicher abgerufen und ausgegeben werden. Der Servicetechniker kann dies beispielsweise mittels seines Wartungsgeräts, Mobiltelefons oder Laptops tun. Hierdurch kann ein Servicetechniker vor Ort und ohne umständliche Rückfragen, auf die Transportüberwachungsdaten zugreifen. Der Zusammenhang einer Fehlfunktion der Personentransportvorrichtung 4 mit während des Transportes aufgetretenen Ereignissen beziehungsweise Einwirkungen kann hierdurch festgestellt werden. Somit können auch Defekte aus dynamischen Einwirkungen, die eventuell erst lange Zeit nach der Auslieferung auftreten, noch festgestellt und nachgewiesen werden. Dies vereinfacht gegebenenfalls auch die Fehlersuche. Selbstverständlich können die Transportdaten auch aus dem Datenspeicher 17 ausgelesen und als zweite Sicherung beispielsweise in einer externen Datenbank oder auf einem USB-Stick hinterlegt werden. Es ist jedoch vorteilhaft, wenn die Transportdaten im Datenspeicher 17 gespeichert bleiben und vorzugsweise mit einem Löschschutz versehen sind.

Da das Transportüberwachungsmodul 2 unabhängig von der Personentransportvorrichtung 4 beziehungsweise Transporteinheit 3 ist, kann das Transportüberwachungsmodul 2 ohne wesentliche Verzögerung erneut genutzt werden. Hierdurch ist es möglich, dass das von der Personentransportvorrichtung 4 entfernte Transportüberwachungsmodul 2 zu einer weiteren Transporteinheit 3 beziehungsweise Personentransportvorrichtung 4 transportiert und dann an der weiteren Transporteinheit 3 zur Überwachung deren Transportes angeordnet wird.

Die Datenerfassung der Sensordaten des Sensors 5 und der Lokalisierungsdaten der Lokalisierungseinrichtungen 6, 7 kann während des Transportes in vorteilhafter Weise von der Steuerung 16 aus erfolgen. Zur Datenerfassung verwendet die Steuerung 16 vorzugsweise ein Computerprogramm 40, welches im Datenspeicher 17 der Steuerung 16 gespeichert sein kann. Optional und daher mit unterbrochener Linie dargestellt, kann das Computerprogramm 40 auch auf einem kleinen, vorzugsweise nichtflüchtigen Speicher 41 gespeichert sein, der im Transportüberwachungsmodul 2 angeordnet ist. Die Steuerung 16 erreicht den nichtflüchtigen Speicher 41 ebenfalls über die Schnittstelleneinheit 9. Die Datenerfassung kann beispielsweise automatisch gestartet werden, wenn es sich beim Computerprogramm 40 um eine ausführbare Datei handelt.

Ferner kann die Steuerung 16 hierbei auch die Übertragung der Sensordaten und der Lokalisierungsdaten über die Schnittstelleneinheit 9 des Transportüberwachungsmoduls und die Speicherung der Transportüberwachungsdaten, die auf den Sensordaten und den Lokalisierungsdaten basieren, in den Datenspeicher 17 steuern. Dadurch ist ein einfacher Aufbau des Transportüberwachungsmoduls 2 möglich. Die Steuerung 16 kann die Transportüberwachungsdaten hierbei permanent in dem Datenspeicher 17 speichern.

Fig. 2 zeigt ein System 1 mit einem Transportüberwachungsmodul 2 und mit einer Personentransportvorrichtung 4 in einer auszugsweisen, schematischen Darstellung entsprechend einem ersten Ausführungsbeispiel. In diesem Ausführungsbeispiel ist die Personentransportvorrichtung 4 in Form einer Fahrtreppe 4 ausgestaltet. Die Fahrtreppe 4 kann hierbei je nach Größe in einem Stück oder in mehreren Teilen und somit in mehreren Transporteinheiten 3, 3', 3" verpackt und transportiert werden. Der besseren Erkennbarkeit wegen ist die Transporteinheit 3 vom Rest der Fahrtreppe 4, beziehungsweise von der zweiten Transporteinheit 3' und dritten Transporteinheit 3" getrennt und unverpackt dargestellt. Ferner zeigt die Figur 2 die Personentransportvorrichtung 4 zu beiden Seiten an Aufnahmen abgestützt, wie sie beispielsweise in Gebäuden vorhanden sind. Die Aufnahmen können aber auch Transportböcke sein, die beispielsweise in einem Container angeordnet sind, um die Fahrtreppe 4 während des Transportes abzustützen.

Die Transporteinheit 3, in der sich die Steuerung 16 befindet, ist besonders empfindlich bezüglich möglicher Einwirkungen, wie Stößen und Stürzen. Deshalb wird zumindest an der Transporteinheit 3 mit der Steuerung 16 ein Transportüberwachungsmodul 2 angeordnet. In diesem Ausführungsbeispiel ist das Transportüberwachungsmodul 2 direkt an der Steuerung 16 angeordnet. Hierbei kann das Verbindungselement 19 der Schnittstelleneinheit 9 des Transportüberwachungsmoduls 2 so ausgestaltet werden, dass eine direkte Verbindung mit der Steuerung 16 an der Anschlussstelle 18 möglich ist. Hierbei entfällt das Verbindungskabel 15.

Die Transporteinheit 3, in der sich die Steuerung 16 befindet, ist in diesem Ausführungsbeispiel so ausgestaltet, dass in der Nähe der Steuerung 16 eine Antriebseinheit 25 mit einem Übertragungstrieb 26 angeordnet sind. Die Antriebseinheit 25 kann beispielsweise einen Elektromotor und ein Getriebe aufweisen. Der Übertragungstrieb 26 kann beispielsweise als Kettentrieb 26, Riementrieb 26, Übertragungsgetriebe 26 oder Vorgelege 26 ausgestaltet sein. Die ebenfalls empfindliche Antriebseinheit 25 wird somit durch das Transportüberwachungsmodul 2 mit überwacht. Somit kann durch eine konstruktive Ausgestaltung der Personentransportvorrichtung 4 eine Überwachung der empfindlichen Komponenten, insbesondere der Steuerung 16 und der Antriebseinheit 25, erfolgen.

Vorzugsweise wird, wie in der Figur 2 dargestellt, das Transportüberwachungsmodul 2 bis zur Fertigstellung des Einbaus ins Gebäude im System 1 belassen und erst entfernt, wenn der Einbau abgeschlossen ist und die Inbetriebnahme der Fahrtreppe erfolgt ist. Dadurch können auch Ereignisse, die während des Einbaus der Fahrtreppe 4 in das Gebäude oder Bauwerk auftreten, erfasst werden.

Fig. 3 zeigt ein System 1 mit einem Transportüberwachungsmodul 2 und einer Personentransportvorrichtung 4 in einer auszugsweisen, schematischen Darstellung gemäß einem zweiten Ausführungsbeispiel. Die dargestellte Personentransportvorrichtung ist ein Fahrsteig 4. In diesem Ausführungsbeispiel ist die Personentransportvorrichtung 4 so kurz ausgestaltet, dass ein Transport als Ganzes möglich ist. Eine Unterteilung in Transporteinheiten ist daher nicht nötig. Hierbei wird das Transportüberwachungsmodul 2 an einer geeigneten Stelle 27 der Personentransportvorrichtung 4 befestigt. Die Stelle 27 ist so gewählt, dass einerseits Einwirkungen an einem Ende 28, an dem sich die Steuerung 16 und die Antriebseinheit 25 befinden, zuverlässig erkannt werden können und andererseits auch Einwirkungen an einem anderen Ende 29, das von der Steuerung 16 und der Antriebseinheit 25 weit entfernt ist, noch in ausreichendem Maße erkannt und aufgezeichnet werden können.

Sowohl bei dem ersten Ausführungsbeispiel, das anhand der Fig. 2 beschrieben ist, als auch bei dem zweiten Ausführungsbeispiel, das anhand der Fig. 3 beschrieben ist, kann eine Entfernung des Transportüberwachungsmoduls 2 nach dem Transport erfolgen. Hierbei kann die Entfernung des Transportüberwachungsmoduls 2 unmittelbar nach dem erfolgten Transport erfolgen, da die Transportüberwachungsdaten in dem Datenspeicher 17 hinterlegt sind. Somit ist keine gesonderte Sicherung der Transportüberwachungsdaten erforderlich. Dies vereinfacht auch die Handhabung und schließt Fehlerquellen infolge einer ansonsten möglichen unsachgemäßen Handhabung aus.

Die Schnittstelleneinheit 9 kann insbesondere über eine RS-Schnittstelle, einen Busknoten oder dergleichen mit der Steuerung 16 kommunizieren.

Das Transportüberwachungsmodul 2 kann außerdem auch weitere Sensoren oder Sensorfunktionen aufweisen. Speziell können auch die klimatischen Verhältnisse, insbesondere Temperatur, Luftdruck, Luftfeuchtigkeit oder dergleichen mehr erfasst werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können. Es können beispielsweise mehrere Schnittstellen vorhanden sein, über die das Transportüberwachungsmodul mit dem Datenspeicher verbunden ist. Ferner können auch mehrere Transportüberwachungsmodule in einer Personentransportvorrichtung beziehungsweise in einer Transporteinheit als Teil einer Personentransportvorrichtung verteilt angeordnet sein, welche während des Transportes alle mit dem Datenspeicher der Personentransportvorrichtung verbunden sind. Zudem kann die Steuerung mehr als einen Datenspeicher aufweisen. Es ist auch möglich, dass eine Personentransportvorrichtung wie in der EP 1 777 192 B1 offenbart, aus Redundanzgründen mehr als eine Steuerung aufweist. Erfindungsgemäß kann jede dieser Steuerungen beziehungsweise deren Datenspeicher mit mindestens einem Transportüberwachungsmodul verbunden sein. Um die Diebstahlsicherheit noch zu erhöhen, können ferner vom Transportüberwachungsmodul Signale und Daten in einem spezifischen Format oder verschlüsselt übertragen werden, so dass das Transportüberwachungsmodul nur zusammen mit dem in der Steuerung geladenen Computerprogramm verwendet werden kann.

## Patentansprüche

1. System (1), aufweisend eine Personentransportvorrichtung (4) die als Fahrtreppe, Fahrsteig oder Aufzug ausgestaltet ist und weiter aufweisend mindestens ein Transportüberwachungsmodul (2), welches während des Transports der Personentransportvorrichtung (4) von ihrem Absendungsort zu ihrem Bestimmungsort an der Personentransportvorrichtung (4) oder an einer Transporteinheit (3, 3', 3") als Teil der Personentransportvorrichtung (4) anordnenbar und nach dem Transport entfernbar ist, und welches Transportüberwachungsmodul (2) zumindest einen Sensor (5) aufweist, wobei der Transport der Personentransportvorrichtung (4) durch einen Transporteur erfolgt, wobei das Transportüberwachungsmodul (2) eine Schnittstelleneinheit (9) aufweist, über die zumindest während des Transportes der Personentransportvorrichtung (4) beziehungsweise Transporteinheit (3, 3', 3") eine Verbindung des Transportüberwachungsmoduls (2) mit einem Datenspeicher (17) der Personentransportvorrichtung (4) herstellbar ist, wobei die Schnittstelleneinheit (9) so ausgestaltet ist, dass zu speichernde Transportüberwachungsdaten, die zumindest teilweise auf Sensordaten des zumindest einen Sensors (5) basieren, in dem Datenspeicher (17) der Personentransportvorrichtung (4) permanent speicherbar sind und der Datenspeicher (17) in der Personentransportvorrichtung (4) permanent verbleibend angeordnet ist.

2. System (1) nach Anspruch 1, wobei die Schnittstelleneinheit (9) ein Verbindungselement (19) aufweist, an dem die Schnittstelleneinheit (9) über eine lösbare Verbindung (19, 20) zumindest mittelbar mit dem Datenspeicher (17) der Personentransportvorrichtung (4) verbindbar ist.

3. System (1) nach Anspruch 1 oder 2, wobei die Schnittstelleneinheit (9) physisch mittels einer Steckverbindung (19, 20) mit dem Datenspeicher (17) der Personentransportvorrichtung (4) verbindbar ist.

4. System (1) nach einem der Ansprüche 1 bis 3, wobei ein Energiespeicher (8) vorgesehen ist, der den zumindest einen Sensor (5) und/oder die Schnittstelleneinheit (9) und/oder zumindest eine weitere Einrichtung (6, 7, 16) zumindest während des Transportes mit elektrischer Energie versorgt.

5. System (1) nach einem der Ansprüche 1 bis 4, wobei eine örtliche Lokalisierungseinrichtung (6), welche Lokalisierungsdaten bezüglich einer örtlichen Lokalisierung erzeugt, und/oder eine zeitliche Lokalisierungseinrichtung (7), welche Lokalisierungsdaten bezüglich einer relativen und/oder absoluten zeitlichen Lokalisierung erzeugt, vorgesehen ist und die zu speichernden Transportüberwachungsdaten auf den Sensordaten des zumindest einen Sensors (5) sowie auf den, den Sensordaten zugeordneten örtlichen Lokalisierungsdaten der örtlichen Lokalisierungseinrichtung (6) und/oder zeitlichen Lokalisierungsdaten der zeitlichen Lokalisierungseinrichtung (7) basieren.

6. System (1) nach einem der Ansprüche 1 bis 5, wobei zumindest ein Sensor (5) als dreiachsiger Beschleunigungssensor (5) ausgebildet ist.

7. System (1) nach einem der Ansprüche 1 bis 6, wobei die Personentransportvorrichtung (4) eine Steuerung (16) aufweist die den Datenspeicher (17) umfasst und durch die Steuerung (16) zumindest während des Transportes die Erfassung der Sensordaten des mindestens einen Sensors (5), die Übertragung der Sensordaten über die Schnittstelleneinheit (9) des Transportüberwachungsmoduls (2) zur Steuerung (16), die Aufbereitung der Sensordaten zu Transportüberwachungsdaten und die Speicherung der Transportüberwachungsdaten im Datenspeicher (17) steuerbar sind.

8. System (1) nach Anspruch 7, wobei bei Vorhandensein zumindest einer Lokalisierungseinrichtung (5, 6) deren Lokalisierungsdaten über die Schnittstelleneinheit (9) des Transportüberwachungsmoduls (2) durch die Steuerung (16) abrufbar sind und durch die Steuerung (16) die Lokalisierungsdaten den Sensordaten zuordenbar sind.

9. System (1) nach Anspruch 8, wobei die Transportüberwachungsdaten permanent im Datenspeicher (17) der Steuerung (16) gespeichert sind.

10. Verfahren zur Überwachung eines Transportes einer Personentransportvorrichtung (4) oder zumindest einer Transporteinheit (3, 3', 3") als Teil einer Personentransportvorrichtung (4) von ihrem Absendungsort zu ihrem Bestimmungsort durch einen Transporteur, wobei die Personentransportvorrichtung (4) als Fahrtreppe, Fahrsteig oder Aufzug ausgestaltet ist, wobei durch Anordnen mindestens eines Transportüberwachungsmoduls (2) an der Transporteinheit (3, 3', 3") beziehungsweise an der Personentransportvorrichtung (4) ein System (1) nach einem der Ansprüche 1 bis 9 gebildet wird, wobei zumindest während eines Transportes eine Verbindung des Transportüberwachungsmoduls (2) mit einem Datenspeicher (17) der Personentransportvorrichtung (4) über eine Schnittstelleneinheit (9) des Transportüberwachungsmoduls (2) hergestellt wird und wobei zu speichernde Transportüberwachungsdaten, die zumindest teilweise auf Sensordaten zumindest eines Sensors (5) des Transportüberwachungsmoduls (2) basieren, in dem Datenspeicher (17) der Personentransportvorrichtung (4) permanent gespeichert werden und die Sensordaten permanent mit der Personentransportvorrichtung (4) verknüpft sind, da der Datenspeicher (17) in der Personentransportvorrichtung (4) permanent verbleibend angeordnet ist.

11. Verfahren nach Anspruch 10, wobei die in dem Datenspeicher (17) der Personentransportvorrichtung (4) gespeicherten Transportüberwachungsdaten nach dem Transport ausgelesen werden und in Abhängigkeit von den ausgelesenen Transportüberwachungsdaten bestimmt und ausgegeben wird, ob eine Rücksendung der Personentransportvorrichtung (4) oder deren Transporteinheit, eine Anforderung von Reparaturmaterial oder eine Montage der Personentransportvorrichtung (4) empfehlenswert ist.

12. Verfahren nach Anspruch 10 oder 11, wobei das Transportüberwachungsmodul (2) nach dem Transport entfernt wird, die Transportüberwachungsdaten nach der Entfernung des Transportüberwachungsmoduls (2) permanent in dem Datenspeicher (17) der Personentransportvorrichtung (4) gespeichert bleiben und zumindest bei einer Fehlfunktion der Personentransportvorrichtung (4) und/oder einer Wartung der Personentransportvorrichtung (4) eine zumindest auf Anfrage erfolgende Ausgabe der Transportüberwachungsdaten aus dem Datenspeicher (17) erfolgt.

13. Verfahren nach Anspruch 12, wobei das entfernte Transportüberwachungsmodul (2) zu einer weiteren Personentransportvorrichtung (4) oder zu einer weiteren Transporteinheit als Teil einer Personentransportvorrichtung (4) transportiert und dann an der weiteren Personentransportvorrichtung (4) beziehungsweise Transporteinheit (3, 3', 3") zur Überwachung des Transportes der weiteren Personentransportvorrichtung (4) beziehungsweise Transporteinheit (3, 3', 3") angeordnet wird.

14. Verfahren nach Anspruch 10 oder 11, wobei das Transportüberwachungsmodul (2) nach dem Transport und der Montage der Personentransportvorrichtung (4) in der Personentransportvorrichtung (4) verbleibt und fortan der Erfassung von auf die Personentransportvorrichtung (4) einwirkenden kritischen Schwingungen dient.

## Claims

1. System (1) comprising a passenger transport apparatus (4) which is designed as an escalator, moving walkway or elevator and further comprising at least one transport monitoring module (2), which, during transport of the passenger transport apparatus (4) from its place of dispatch to its destination, can be arranged on the passenger transport apparatus (4) or on a transport unit (3, 3', 3") as part of the passenger transport apparatus (4) and can be removed after transport, and which transport monitoring module (2) has at least one sensor (5), wherein the passenger transport apparatus (4) is transported by a carrier, wherein the transport monitoring module (2) has an interface unit (9) via which, at least during transport of the passenger transport apparatus (4) or transport unit (3, 3', 3"), a connection of the transport monitoring module (2) to a data store (17) of the passenger transport apparatus (4) can be established, wherein the interface unit (9) is designed such that transport monitoring data to be stored, which data is based at least partially on sensor data from at least one sensor (5), can be permanently stored in the data store (17) of the passenger transport apparatus (4) and the data store (17) is arranged so as to remain permanently in the passenger transport apparatus (4).

2. System (1) according to claim 1, wherein the interface unit (9) has a connection element (19) at which the interface unit (9) can be connected at least indirectly to the data store (17) of the passenger transport apparatus (4) via a detachable connection (19, 20).

3. System (1) according to either claim 1 or claim 2, wherein the interface unit (9) can be physically connected to the data store (17) of the passenger transport apparatus (4) by means of a plug connection (19, 20).

4. System (1) according to any of claims 1 to 3, wherein an energy store (8) is provided which supplies the at least one sensor (5) and/or the interface unit (9) and/or at least one further device (6, 7, 16) with electrical energy at least during transport.

5. System (1) according to any of claims 1 to 4, wherein a spatial localization device (6) which generates localization data relating to a spatial localization, and/or a temporal localization device (7) which generates localization data relating to a relative and/or absolute temporal localization, is provided and the transport monitoring data to be stored is based on the sensor data from the at least one sensor (5) and on the spatial localization data from the spatial localization device (6) and/or temporal localization data from the temporal localization device (7), which localization data is associated with the sensor data.

6. System (1) according to any of claims 1 to 5, wherein at least one sensor (5) is designed as a three-axis acceleration sensor (5).

7. System (1) according to any of claims 1 to 6, wherein the passenger transport apparatus (4) has a controller (16) which comprises the data store (17) and the capture of the sensor data from the at least one sensor (5), the transmission of the sensor data via the interface unit (9) of the transport monitoring module (2) to the controller (16), the processing of the sensor data to form transport monitoring data and the storage of the transport monitoring data in the data store (17) are controllable by means of the controller (16) at least during transport.

8. System (1) according to claim 7, wherein when at least one localization device (5, 6) is present, the localization data of said device can be called up by the controller (16) via the interface unit (9) of the transport monitoring module (2) and the localization data can be associated with the sensor data by the controller (16).

9. System (1) according to claim 8, wherein the transport monitoring data is permanently stored in the data store (17) of the controller (16).

10. Method for monitoring transport of a passenger transport apparatus (4) or at least one transport unit (3, 3', 3") as part of a passenger transport apparatus (4) from its place of dispatch to its destination by a carrier, wherein the passenger transport apparatus (4) is designed as an escalator, moving walkway or elevator, wherein, by arranging at least one transport monitoring module (2) on the transport unit (3,3', 3") or on the passenger transport apparatus (4), a system (1) according to one of claims 1 to 9 is formed, wherein, at least during transport, a connection of the transport monitoring module (2) to a data store (17) of the passenger transport apparatus (4) is established via an interface unit (9) of the transport monitoring module (2) and wherein transport monitoring data to be stored, which data is at least partially based on sensor data from at least one sensor (5) of the transport monitoring module (2), is permanently stored in the data store (17) of the passenger transport apparatus (4) and the sensor data is permanently linked to the passenger transport apparatus (4) since the data store (17) is arranged so as to remain permanently in the passenger transport apparatus (4).

11. Method according to claim 10, wherein the transport monitoring data stored in the data store (17) of the passenger transport apparatus (4) is read out after transport and, depending on the read-out transport monitoring data, it is determined and output whether a return of the passenger transport apparatus (4) or its transport unit, a request for repair material or an assembly of the passenger transport apparatus (4) is recommended.

12. Method according to either claim 10 or claim 11, wherein the transport monitoring module (2) is removed after transport, the transport monitoring data remains permanently stored in the data store (17) of the passenger transport apparatus (4) after removal of the transport monitoring module (2) and, at least in the event of a malfunction of the passenger transport apparatus (4) and/or maintenance the passenger transport apparatus (4), the transport monitoring data is output from the data store (17) at least on request.

13. Method according to claim 12, wherein the removed transport monitoring module (2) is transported to another passenger transport apparatus (4) or to another transport unit as part of a passenger transport apparatus (4) and then arranged on the further passenger transport apparatus (4) or transport unit (3, 3', 3") for monitoring the transport of the further passenger transport apparatus (4) or transport unit (3, 3', 3").

14. Method according to either claim 10 or claim 11, wherein the transport monitoring module (2) remains in the passenger transport apparatus (4) after transport and assembly of the passenger transport apparatus (4) and thereafter serves to detect critical vibrations acting on the passenger transport apparatus (4).

## Revendications

1. Système (1) comportant un dispositif de transport de personnes (4) qui est conçu sous la forme d'un escalier roulant, d'un trottoir roulant ou d'un ascenseur, et comportant en outre au moins un module de surveillance de transport (2) qui, pendant le transport du dispositif de transport de personnes (4) de son lieu de départ à son lieu de destination, peut être disposé au niveau du dispositif de transport de personnes (4) ou au niveau d'une unité de transport (3, 3', 3") en tant que partie du dispositif de transport de personnes (4) et peut être retiré après le transport, et ledit module de surveillance de transport (2) comporte au moins un capteur (5), le transport du dispositif de transport de personnes (4) étant effectué par un transporteur, le module de surveillance de transport (2) comportant une unité d'interface (9) par l'intermédiaire de laquelle une liaison entre le module de surveillance de transport (2) et une mémoire de données (17) du dispositif de transport de personnes (4) peut être établie au moins pendant le transport du dispositif de transport de personnes (4) ou de l'unité de transport (3, 3', 3"), l'unité d'interface (9) étant conçue de sorte que des données de surveillance de transport à stocker, qui sont basées au moins en partie sur les données de capteur de l'au moins un capteur (5), peuvent être stockées en permanence dans la mémoire de données (17) du dispositif de transport de personnes (4) et la mémoire de données (17) est disposée pour rester en permanence dans le dispositif de transport de personnes (4).

2. Système (1) selon la revendication 1, dans lequel l'unité d'interface (9) comporte un élément de liaison (19) au niveau duquel l'unité d'interface (9) peut être reliée au moins indirectement à la mémoire de données (17) du dispositif de transport de personnes (4) par l'intermédiaire d'une liaison amovible (19, 20).

3. Système (1) selon la revendication 1 ou 2, dans lequel l'unité d'interface (9) peut être reliée physiquement à la mémoire de données (17) du dispositif de transport de personnes (4) au moyen d'un connecteur (19, 20).

4. Système (1) selon l'une des revendications 1 à 3, dans lequel un accumulateur d'énergie (8) est prévu, qui alimente l'au moins un capteur (5) et/ou l'unité d'interface (9) et/ou au moins un autre moyen (6, 7, 16) en énergie électrique au moins pendant le transport.

5. Système (1) selon l'une des revendications 1 à 4, dans lequel un moyen de localisation spatiale (6), qui génère des données de localisation concernant une localisation spatiale, et/ou un moyen de localisation temporelle (7), qui génère des données de localisation concernant une localisation temporelle relative et/ou absolue, est prévu et les données de surveillance de transport à stocker sont basées sur les données de capteur de l'au moins un capteur (5) et sur les données de localisation spatiale du moyen de localisation spatiale (6) associées aux données de capteur et/ou sur les données de localisation temporelle du moyen de localisation temporelle (7).

6. Système (1) selon l'une des revendications 1 à 5, dans lequel au moins un capteur (5) est conçu sous la forme d'un capteur d'accélération triaxial (5).

7. Système (1) selon l'une des revendications 1 à 6, dans lequel le dispositif de transport de personnes (4) comporte un dispositif de commande (16) qui comprend la mémoire de données (17) et, au moins pendant le transport, le dispositif de commande (16) peut commander l'acquisition des données de capteur de l'au moins un capteur (5), la transmission des données de capteur par l'intermédiaire de l'unité interface (9) du module de surveillance de transport (2) au dispositif de commande (16), la transformation des données de capteur en données de surveillance de transport et le stockage des données de surveillance de transport dans la mémoire de données (17).

8. Système (1) selon la revendication 7, dans lequel, en présence d'au moins un moyen de localisation (5, 6) dont les données de localisation peuvent être appelées par le dispositif de commande (16) par l'intermédiaire de l'unité d'interface (9) du module de surveillance de transport (2), les données de localisation peuvent être associées aux données de capteur par le dispositif de commande (16).

9. Système (1) selon la revendication 8, dans lequel les données de surveillance de transport sont stockées en permanence dans la mémoire de données (17) du dispositif de commande (16).

10. Procédé de surveillance du transport d'un dispositif de transport de personnes (4) ou d'au moins une unité de transport (3, 3', 3") en tant que partie d'un dispositif de transport de personnes (4) de son lieu de départ à son lieu de destination par un transporteur, le dispositif de transport de personnes (4) étant conçu sous la forme d'un escalier roulant, d'un trottoir roulant ou d'un ascenseur, un système (1) selon l'une des revendications 1 à 9 étant formé par la disposition d'au moins un module de surveillance de transport (2) au niveau de l'unité de transport (3, 3', 3") ou au niveau du dispositif de transport de personnes (4), au moins pendant un transport, une liaison entre le module de surveillance de transport (2) et une mémoire de données (17) du dispositif de transport de personnes (4) étant établie par l'intermédiaire d'une unité d'interface (9) du module de surveillance de transport (2), et des données de surveillance de transport à stocker, qui sont basées au moins en partie sur des données de capteur d'au moins un capteur (5) du module de surveillance de transport (2), étant stockées en permanence dans la mémoire de données (17) du dispositif de transport de personnes (4) et les données de capteur étant reliées en permanence au dispositif de transport de personnes (4), puisque la mémoire de données (17) est disposée pour rester en permanence dans le dispositif de transport de personnes (4).

11. Procédé selon la revendication 10, dans lequel les données de surveillance de transport stockées dans la mémoire de données (17) du dispositif de transport de personnes (4) sont lues après le transport et, en fonction des données de surveillance de transport lues, il est déterminé et indiqué si un renvoi du dispositif de transport de personnes (4) ou de son unité de transport, une demande de matériau de réparation ou un montage du dispositif de transport de personnes (4) est recommandé(e).

12. Procédé selon la revendication 10 ou 11, dans lequel le module de surveillance de transport (2) est retiré après le transport, les données de surveillance de transport restant stockées en permanence dans la mémoire de données (17) du dispositif de transport de personnes (4) après le retrait du module de surveillance de transport (2), et au moins en cas de dysfonctionnement du dispositif de transport de personnes (4) et/ou de maintenance du dispositif de transport de personnes (4), les données de surveillance de transport sont émises au moins sur demande à partir de la mémoire de données (17).

13. Procédé selon la revendication 12, dans lequel le module de surveillance de transport (2) retiré est transporté vers un autre dispositif de transport de personnes (4) ou vers une autre unité de transport en tant que partie d'un dispositif de transport de personnes (4) et est ensuite disposé au niveau de l'autre dispositif de transport de personnes (4) ou de l'autre unité de transport (3, 3', 3") pour surveiller le transport de l'autre dispositif de transport de personnes (4) ou de l'autre unité de transport (3, 3', 3").

14. Procédé selon la revendication 10 ou 11, dans lequel le module de surveillance de transport (2) reste dans le dispositif de transport de personnes (4) après le transport et le montage du dispositif de transport de personnes (4) et sert ensuite à détecter des vibrations critiques agissant sur le dispositif de transport de personnes (4).
